# EUROPEAN PATENT SPECIFICATION

(11) **EP 0 520 518 B1**
(45) Date of publication and mention of the grant of the patent: **28.02.1996**
(21) Application number: 92111010.2
(22) Date of filing: 29.06.1992
(51) Int. Cl.: F02B 31/00, F01L 3/06, F02D 9/16

(54) **Induction system for an internal combustion engine**
Einlasssystem für eine Brennkraftmaschine
Système d'admission pour un moteur à combustion interne

(30) Priority: 28.06.1991 JP 185400/91; 27.12.1991 JP 360129/91
(43) Date of publication of application: 30.12.1992
(73) Proprietor: YAMAHA HATSUDOKI KABUSHIKI KAISHA, Iwata-shi Shizuoka-ken, 438 (JP)
(72) Inventor: Isaka, Yoshiharu, Iwata-shi, Shizuoka-ken, 438 (JP); Ito, Masahiro, Iwata-shi, Shizuoka-ken, 438 (JP)
(74) Representative: Grünecker, Kinkeldey, Stockmair & Schwanhäusser Anwaltssozietät

(56) References cited:
- DE-A- 3 429 414
- JP-A-62 107 228
- US-A- 4 320 725
- US-A- 4 428 334
- US-A- 4 974 566
- PATENT ABSTRACTS OF JAPAN vol. 10, no. 231 (M-506)(2287) 12 August 1986 & JP-A-61 065 064

## Description

The present invention relates to an internal combustion engine having an induction system and comprising a cylinder head and a cylinder block, said cylinder head at least partially defining a combustion chamber, an intake passage arrangement serving at least one intake valve of a cylinder, said intaken passage arrangement being controlled by a control valve which is rotatably supported in the cylinder head wherein the axis of the control valve extends transversely to the flow path of the intake charge through the intake passage arrangement and a rectifier plate arrangement which is disposed within a downstream end portion of an intake passage.

The design of the intake passage and induction system of an internal combustion engine is very important in determining its performance under all running conditions. Therefore, devices have already been proposed for inducing particular types of motion within the cylinder, at least under some running conditions so as to improve mixture, distribution and turbulence in the combustion chamber. However, these turbulence inducing devices should not interfere with the volumetric efficiency at high speed.

An induction system for an internal combustion engine was already suggested in EP-A-500123 or EP-A-500124 (published on 26.08.92) of the applicant improving the swirl and/or tumble motion of the intake charge in order to create turbulence in the combustion chamber to which the intake charge is supplied. Specifically, a transversely disposed rotary control valve having cut-outs to comply with the cross-section of the intake passage were applied close to the combustion chamber, specifically positioned at a bight of the intake passage, in order to induce the desired swirl and/or tumble motion of the intake charge.

An internal combustion engine of the above indicated type is known from JP-A-62 107 228 showing a rectifier plate arrangement disposed within a downstream end portion of the intake passage.

Even though said solutions for some applications procure the desired effects sufficiently, it is nevertheless desirable to improve the controllability of the introduction of a swirl and/or tumble to the intake charge in response to the engine running conditions increasing the variability of flow patterns achievable.

Accordingly, it is an objective of the present invention to provide an improved internal combustion engine which enables an improved choice of imparting a swirl and/or tumble motion to the intake charge in response to different running conditions.

According to the present invention the aforeindicated objective is performed in that the control valve is disposed at a bight of a lower side of the intake passage arrangement in proximity to the combustion chamber, said rectifier plate arrangement extending from an intake valve seat portion upwardly into the intake passage arrangement.

Preferred embodiments of the present invention are laid down in the sub-claims.

In the following, the present invention is explained in greater detail by means of several embodiments thereof in conjunction with the accompanying drawings therein:

Figure 1 is a partial view of an internal combustion engine constructed in accordance with an embodiment of the invention, with a portion broken away and shown in cross section.

Figure 2 is a further enlarged view of the combustion chaser area of the engine and the intake port taken along the same plane as Figure 1.

Figure 3 is a cross-sectional view taken along the line 3-3 of Figure 2.

Figure 4 is an enlarged cross-sectional view taken along the line 4-4 of Figure 1.

Figure 5 is an enlarged perspective view showing the cooperation of the control valve with the rectifier plate.

Figure 6 is a cross-sectional view, in part similar to Figure 2, and shows another embodiment of the invention.

Figure 7 is a cross-sectional view taken along the line 7-7 of Figure 6.

Figure 8 is a perspective view, in part similar to Figure 5, shoving the cooperation of the control valve with the rectifier plate in this embodiment.

Figure 9, is a side elevational view of an internal combustion engine constructed in accordance with a third embodiment of the invention, with a portion broken away.

Figure 10 is a cross-sectional view taken along the line 10-10 of Figure 9.

Figure 11 is another partial view of an internal combustion engine according to another embodiment of the present invention in a view similar to Figures 2 and 6.

Figure 12 is an enlarged perspective view of the rectifier plate according to Figure 10.

### DETAILED DESCRIPTION OF THE PREFERRED EMBODIMENTS OF THE INVENTION

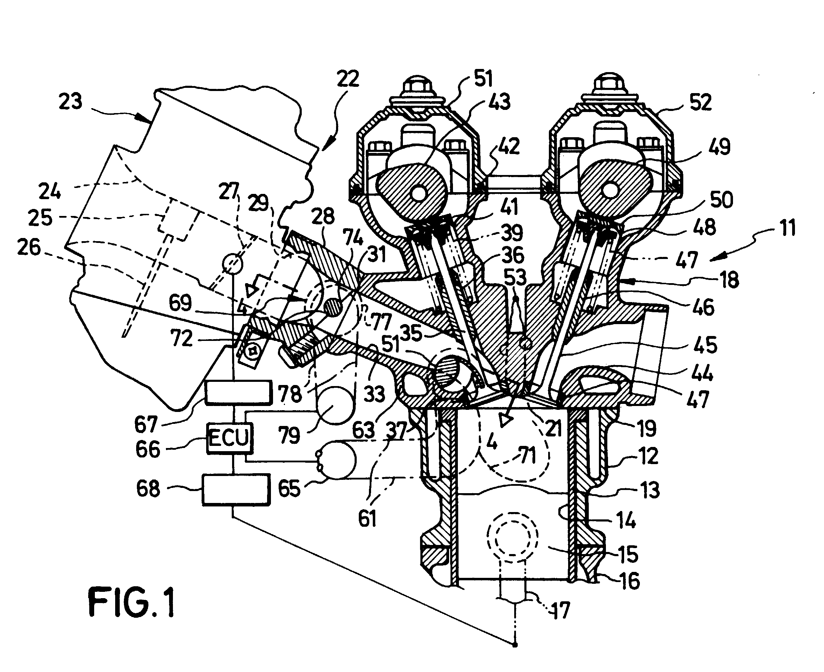

Referring first to the embodiment of Figures 1-5 and initially primarily to Figure 1, an internal combustion engine constructed in accordance with this embodiment of the invention is illustrated partially and is identified generally by the reference numeral 11. The invention deals primarily with the induction system for the engine 11 and for that reason, only the induction portion of the engine has been illustrated in detail along with certain adjacent components for orientation purposes. In addition, a cross-sectional view taken through only a single cylinder of the engine 11 is all that is believed to be necessary to understand the construction and operation of this embodiment. It is believed obvious to those skilled in the art how the invention can be employed in conjunction with multiple cylinder engines of any configuration.

The engine 11 includes a cylinder block 12 having a pressed or cast-in cylinder liner 13 that forms a cylinder bore 14 in which a piston 15 reciprocates. The cylinder block 12 is affixed to a crankcase member, shown partially at 16, in which a crankshaft (not shown) is supported for rotation. A connecting rod 17 connects the piston 15 to the crankshaft for driving the crankshaft in a well known manner.

A cylinder head assembly, indicated generally by the reference numeral 18, is affixed to the cylinder block 12 in an appropriate manner. The cylinder head 18 has a lower surface 19 that is matingly engaged with the upper portion of the cylinder block 12 and cylinder liner 13 and which defines a combustion chamber in part by means of a recess 21 formed in the lower surface 19 of the cylinder head 18.

A fuel/air charge is delivered to the combustion chambers 21 by an induction system, indicated generally by the reference numeral 22. In this embodiment, the induction system includes a charge former 23 in the torn of a variable venturi carburetor 23 which draws atmospheric air from an air cleaner (not shown). The carburetor 23 is formed with an induction passage 24 in which a sliding throttle piston 25 is supported for reciprocation, which piston is operated to maintain a constant pressure drop through the induction passage 24 regardless of the speed of running of the engine. In addition, a metering rod 26 is affixed to the throttle piston 25 for controlling the supply of fuel delivered to the induction passage 24 by the idle and main circuits (not shown) of the carburetor 23.

A manually operated throttle valve 27 is positioned in the carburetor induction passage 24 for controlling the speed of operation of the engine 11 in a known manner. The carburetor 23 is the type normally used in a motorcycle and the engine 11 in this embodiment may be employed to empower a motorcycle. As will become apparent by description of certain other embodiments, it is to be understood that the invention may be practiced in conjunction with other applications for internal combustion engines. The invention, however, has particular utility in conjunction with engines that operate over widely varying speed and load ranges for reasons which will become apparent.

The carburetor 23 supplies its fuel air charge to a short Siamese type intake manifold 28 that has a single inlet opening 29 that registers with the carburetor intake passage 24 and a pair of outlet openings 31 and 32 that respectively communicate with the inlet openings of a pair of intake passages 33 and 34 formed in the cylinder head 18. It is to be understood that in this embodiment each combustion chamber 21 is served by a pair of intake passages 33, 34 with the intake passage 33 being considered as the primary intake passage and the intake passage 34 functioning as the secondary intake passage. As will be readily apparent, the invention may be employed in conjunction with engines having only a single intake passage for each combustion chamber 21 or more than two intake passages for each combustion chamber.

It should be noted that each intake passage 33 and 34 has a generally L-shaped configuration with a straight section running from the inlet openings that communicate with the manifold 28 and a shorter section that is angularly disposed to this first section and which communicates directly with the combustion chamber 21. These sections meet at a bight, the significance of which will become apparent.

Intake valves 35 of the poppet type are slidably supported in the cylinder head 18 by respective valve guides 36 and have head portions that control the opening and closing of valve seats 37 pressed into counterbores 38 in the cylinder head recess 21 at the termination of the respective intake passages 33 and 34.

Coil compression springs 39 act against the cylinder head 18 and keeper retainer assemblies 41 affixed to the upper ends of the stems of the valves 35 for urging the valves 35 to their closed position in engagement with the valve seats 37. A thimble type tappet 42 is slidably supported in the cylinder head 18 and associated with the stem of each intake valve 35. An overhead mounted intake cam shaft 43 is driven from the engine crankshaft in a known manner and operates the thimble tappets 42 for effecting opening of the intake valves 35.

A pair of exhaust passages 44 extend through the opposite side of the cylinder head 18 from the intake passages 33 and 34 and communicate with a suitable exhaust system (not shown) for discharging the exhaust gases to the atmosphere, for silencing the exhaust gases and if desired, for catalytically treating the exhaust gases. Exhaust valves 45 are supported for reciprocation in the cylinder head 18 by means of pressed in valve guides 46 and have head portions that cooperate with valve seats 47 formed at the termination of the exhaust ports 44 where they communicate with the combustion chamber 21. The valve seats 47 are, like the intake valve seats 37, pressed into appropriate counterbores in the cylinder head 18.

Coil compression springs 47 act against the cylinder head 18 and keeper retainer assemblies 48 fixed to the exhaust valves 46 for urging the exhaust valves to their closed position in engagement with the valve seats 48. An exhaust cam shaft 49 is rotatably journaled in the cylinder head 18 for opening the exhaust valves 45 through thimble tappets 50. The exhaust cam shaft 49 is like the intake cam shaft 43 driven by the crankshaft of the engine in an appropriate manner. Cam covers 51 and 52 are affixed to the cylinder head 18 in an appropriate manner and enclose the respective intake and exhaust cam shafts 43 and 49.

A spark plug 53 is mounted centrally in the cylinder head 18 with its gap centrally positioned in the recess 21 for firing the fuel/air charge admitted to the combustion chamber 21 by the induction system 22. The spark plug 53 may be fired by any appropriate spark control circuit.

The construction of the engine 11 as thus far described may be considered to be conventional. The invention relates to an arrangement whereby the flow path of the intake charge entering the combustion chamber 21 from the intake passages 33 and 34 may be varied under certain running conditions so as to induce turbulence by means of generating a tumble and/or swirl in the combustion chamber 21 under low and mid-range operations. Such turbulence increasing arrangement improves flame propagation and ensures complete combustion within the combustion chamber 21 even under extreme idle and low speed conditions. However, the construction of the induction system is such that the charge entering the combustion chambers 21 under high speed is substantially unrestricted so as to provide good volumetric efficiency and maximum power output.

These results are achieved by providing a control valve, indicated generally by the reference numeral 54, which is positioned in the cylinder head 18 at the bights of the intake passages 33 and 34. To this end, the cylinder head 18 is provided with a transversely extending bore 55 which extends through the bight area in which a generally cylindrical portion of the control valve 54 is journaled. However, in the area of the intake passages 33 and 34, there is provided a respective cut-out 56 in the control valve 54. In this embodiment, the cut-out 56 for each intake passage 34 and 35 is substantially the same. It is to be understood, however, that different configurations may be employed so as to achieve different flow patterns of the charge entering the combustion chamber 21 from the intake passages 33 and 34 during the time period when the control valve 54 is in one of its flow controlling positions.

The cut-outs 56 are generally configured so that when the control valve 54 is in its fully opened position that the cut-outs 56 will form a smooth, continuous extension of the intake passages 33 and 34 so that no flow obstruction will be encountered. However, when the control valve 54 is in its fully controlled position as shown in the Figures, the cylindrical portion of the control valve 54 will protrude into the intake passages 33 and 34 so as to direct the flow of intake charge therethrough toward the center side of the cylinder. This will effect a generally tumble type of action in the combustion chamber 31 when the control valve 54 is in this position, as described more fully in my afore noted co-pending application.

To further generate this tumble motion, a rectifier plate assembly, indicated generally by the reference numeral 57, is positioned in the primary intake passage 33 in this embodiment. In this embodiment, the rectifier plate 57 is only positioned in the primary intake passage 33 but it is to be understood that such a rectifier plate may be employed in conjunction with the secondary intake passage 34 also. In addition, if only a single intake passage is employed for each cylinder, then a rectifier plate 57 will be provided in that single intake passage.

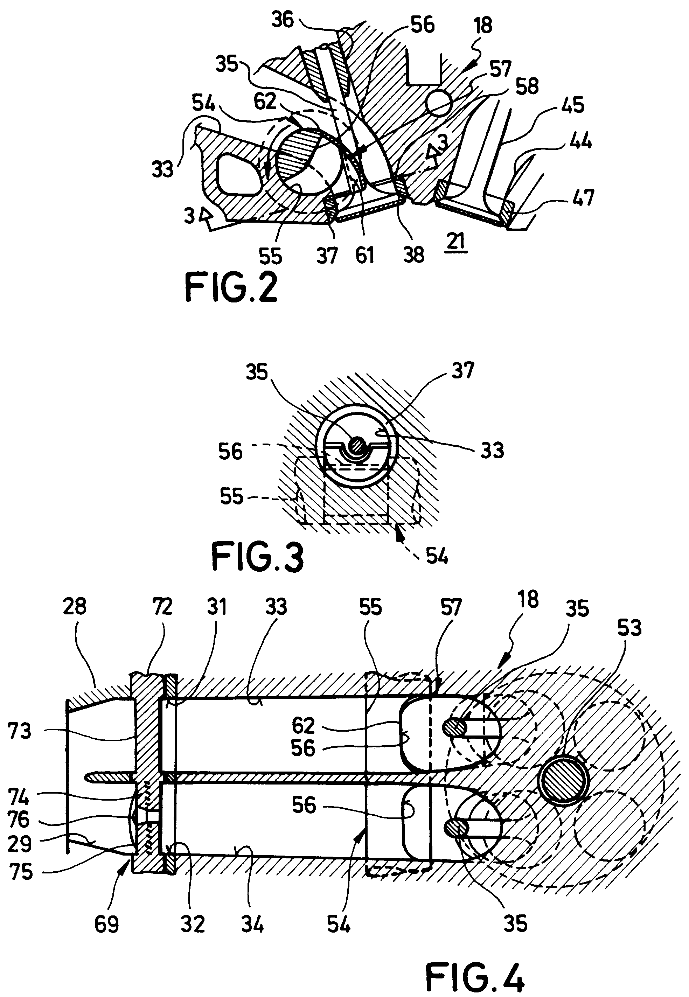

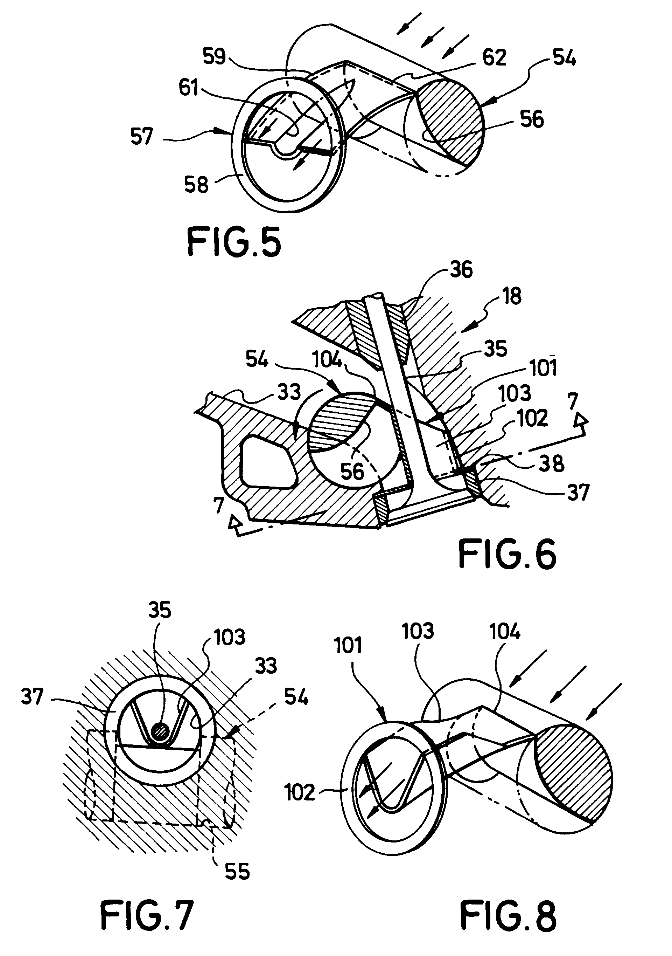

As may be best seen in Figures 2 and 5, the rectifier plate 57 is formed with a generally cylindrical base part 58 that is received within the cylinder head counterbore 38 beneath the valve seat 37 and thus is held in place by the valve seat 37. In addition, the rectifier plate 57 has a rectifying portion 59 that extends into the intake passage 33 and divides it into two portions, one on each side of the axis of the intake valve 35. The rectifier portion 59 is formed with a cylindrical recess 61 that provides a clearance for the stem of the intake valve 35 but provides good definition between the two sides of the flow path defined thereby.

As may be apparent from Figures 1 and 2, when the control valve 54 rotates from its fully opened position in a clockwise direction, the cut-out 56 is positioned so that it will contact an upper edge 62 of the rectifier plate portion 59 and thus provide an effective seal across this side of the intake passage 33 so as to substantially preclude any flow through one side of the intake passage 33. As a result, substantially all of the flow will be channeled toward the other side so as to further promote the tumble operation. In addition, this contact of the control valve cut-out 56 with the rectifier plate edge 62 will act as a stop so as to limit the degree of rotation of the control valve 57 into its flow controlling position.

In addition to this advantage, it should be noted that the flow controlling position of the control valve 54 is such that there is not cavity formed in the intake passage upstream of the control valve 54 when in its flow controlling position in which fuel could tend to condense and accumulate. Said another way, the flow controlling valve 54 in its flow controlling position actually forms an extension of the surface of the cylinder head which defines the intake passage 33 and thus smoothly guides the air flow to the side of the rectifier plate 57 opposite the outside of the cylinder bore. Hence, the flow control valve 54 provides a smooth flow surface in both its open position and in its flow controlling position.

The flow control valve 54 has a pulley 63 affixed to an end which is exposed through one side of the cylinder head 18. A pair of wire transmitters 64 are connected to the pulley 63 and to a driving pulley 65 driven by a motor that is controlled by an ECU 66 so as to position the flow control valve 54 in a position dependent upon engine operating conditions. In the illustrated embodiment, these conditions are throttle valve position, as sensed by a throttle position sensor 67, and engine speed, as sensed by a crank shaft rotational speed sensor 68. As has been previously noted, the control valve 54 is positioned in its flow controlling position primarily at idle and low speed low load conditions.

In addition to the control valve 54, there is further provided a throttle valve arrangement, indicated generally by the reference numeral 69, for controlling the flow through the secondary intake passage 34 to close this passage under some conditions so that all of the intake charge is delivered to the combustion chamber 21 through the primary intake passage 33. As will become apparent, this construction and throttle valve assembly is effective to further induce turbulence in the combustion chamber 21 and induce a generally helical flow path in the combustion chamber as indicated by the broken line 71 in Figure 1.

The throttle valve arrangement 69 includes a throttle valve shaft 72 that is journaled in the manifold 28 and which has a first small diameter portion 73 that extends through the primary intake passage 33 so as to offer relatively low flow resistance. A throttle plate 74 is, however, affixed to a reduced diameter portion 75 of the shaft 72 which passes through the secondary intake passage 34 and is held in place by a screw 76. When the throttle plate 74 is in its closed position as shown in Figure 4, all of the intake charge for the engine must pass through the intake passage 33 so as to provide the desired flow path.

A pulley 77 is affixed to the throttle valve shaft 72 at an exposed end thereof and is operated by means of a pair of wire transmitters 78 that are connected to a drive pulley 79 of a servo motor which is controlled by the ECU 66. Although a wide variety of control strategies may be employed, in a preferred one the ECU positions the throttle valve 74 in its closed position and the control valve 54 in its flow controlling position when the engine is operating at idle or off idle. This induces maximum turbulence in the combustion chamber and the afore noted helical flow pattern in the combustion chamber so as to ensure rapid flame propagation when the spark plug 53 is fired and so as to also ensure that a stoichiometric fuel/air mixture will be present at the gap of the spark plug at the time of ignition.

As the engine speed and/or load increases, the throttle valve 69 is first opened while the control valve 54 is still maintained in its flow controlling position. This changes the motion within the combustion chamber 21 from the helical flow pattern to a tumble type of flow pattern. Then as the speed and load further increases, the control valve 54 is positioned in its open position so as to permit unrestricted flow into the combustion chamber 21 and maximum volumetric efficiency. As has been noted, this is only a preferred sequence of operation and various other sequences of operation may be employed depending upon the type of motion which is desired in the combustion chamber under the various running conditions.

In the embodiment of Figures 1-5, the rectifier plate 57 has had the effect of dividing the primary intake passage 33 into two substantially equal flow areas. Figures 6-8 show another embodiment of the invention wherein the configuration of the rectifier plate is such so as to provide a substantially smaller flow area through the intake passage 33 when the control valve 54 is in its closed position than one-half of its surface area. Since this is the only difference between this embodiment and the previously described embodiment, components which are the same as the previously described embodiments have been identified by the same reference numerals and will be described again only insofar as is necessary to understand the construction and operation of this embodiment.

The rectifier plate of this embodiment is identified generally by the reference numeral 101 and is comprised of a cylindrical base portion 102 that is received within the counterbore 38 of the cylinder head and which is retained in place by the valve seat 37. A plate portion 103 extends outwardly from the base 102 and has a generally V-shaped configuration and which terminates in an upper edge 104 that is contacted by the control valve cut-out 56 to limit its movement in the flow controlling position. As may be seen, the plate portion 103 because of its V shape defines a relatively small flow area which is directed more toward the center of the cylinder than the previously described embodiment and which will generate a higher flow velocity and more turbulence. Like the previously described embodiment, such a rectifier plate may be positioned in only one of plural intake passages serving the same cylinder or, alternatively, may be provided in all of the intake passages serving the same cylinder. In addition, this configuration may be employed in engines having only one intake passage per cylinder.

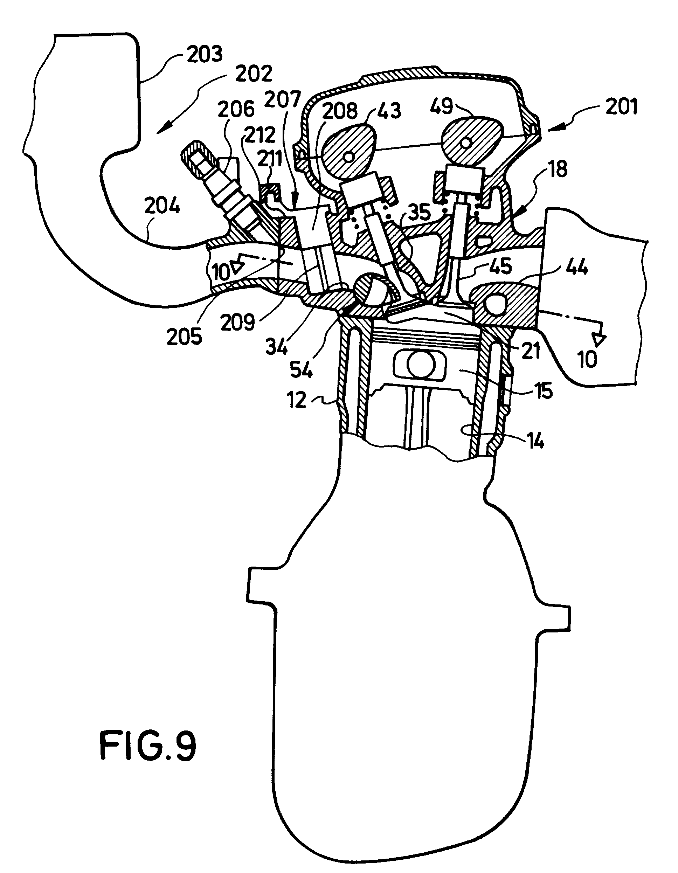

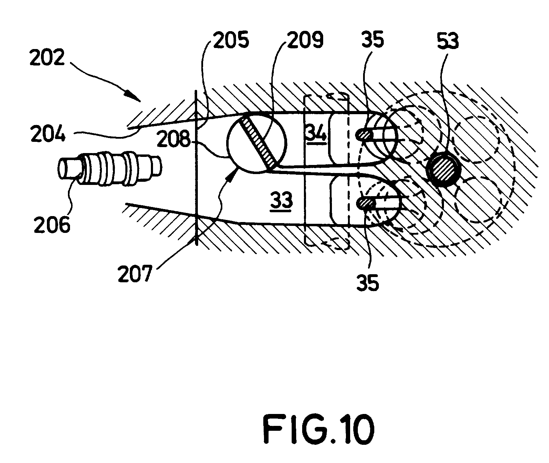

Figures 9 and 10 illustrate another embodiment of the invention which is generally the same as the previously described embodiments and, for that reason, components of this embodiment which are the same or substantially the same as the previously described embodiments have been identified by the same reference numerals and will not be described again, except insofar as is necessary to understand the construction and operation of this embodiment.

An engine constructed in accordance with this embodiment is indicated generally by the reference numeral 201 and is designed primarily for automotive application. The engine 201 is provided with an induction system, indicated generally by the reference numeral 202, and which includes a plenum chamber 203 into which air is drawn from the atmosphere through a suitable intake (not shown) in which a speed controlling throttle valve is positioned. The plenum chamber 203 is provided with a plurality of individual runners 204, each of which serves a respective intake opening 205 formed in a side of the cylinder head 18. In this embodiment, the common intake opening 205 of the cylinder head serves the two passages 33 and 34. Hence. this embodiment employs a Siamese type of intake passage configuration but still employs two intake passages 33 and 34 for each cylinder.

In this embodiment, a fuel/air charge is generated by a fuel injector 206 which is mounted in each manifold runner 204 and which sprays fuel therein under any appropriate control strategy.

In the previously described embodiment, the throttle valve 72 had a shaft portion 73 which extended through the primary intake passage 33 and thus provided some, although minimal, flow resistance in this passage. The advantage of the construction of the previously described embodiments was that all of the throttle valves can be fixed to a common throttle valve shaft. In this embodiment, however, a throttle valve arrangement, indicated generally by the reference numeral 207, is provided for each cylinder of the engine. The throttle valve assembly 207 includes a cylindrical portion 208 that is journaled in an appropriate bore formed in the cylinder head 18 and which extends transversely or perpendicularly to the flow path through the secondary intake passage 34. In the portion of the throttle valve 207 that passes through the passage 34, there is provided a valve plate 209 which in its closed position as shown in the figures, substantially precludes any flow through the secondary intake passage 34 and hence, will divert all of the flow through the primary intake passage 33 with the effect as afore noted. However, when the throttle valve assembly 207 is rotated, the valve plate 209 will extend parallel to the flow path and provide only minimal resistance.

Each of the throttle valves 207 is provided with an outwardly extending arm 211 to which a throttle link 212 is connected so as to interconnect the throttle valves 207 of each cylinder with each other so as to provide simultaneous movement therebetween. Any form of rectifier plate may be employed with the intake passage 33 and/or intake passage 34 in an embodiment of this construction including those as previously described.

This embodiment, thus, means that the engine has three steps of different intake flow beyond the full range of engine speed. Namely, the first stage is acquired when the valve plate 209 assumes its closed position and the control valve as previously explained assumes also its closed position, whereas the second stage is obtained when the valve plate 209 assumes its closed position and the control valve assumes its open position, while finally the third stage is characterised in that all valves including the valve plate 209 and the control valve assumes its open position.

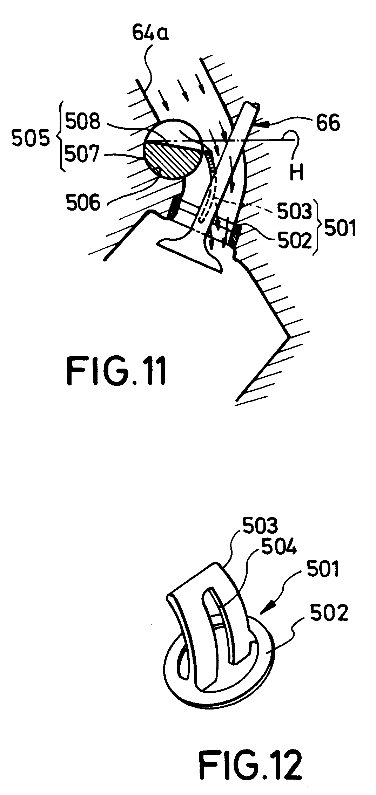

A further embodiment of the present invention is disclosed in Figures 11 and 12.

In this embodiment, one or both intake valves 66 associated with each cylinder cooperates with a valve seat rectifier plate assemblage, indicated generally by the reference numeral 501. This assemblage includes an annular valve seat portion 502 that forms a valve seat as with all of the previously described embodiments. However, a rectifier plate portion 503 extends integrally upwardly from the valve seat portion 502 and into the respective intake passage 64a and/or 64b depending upon whether one or both passages is controlled by a control valve element. The rectifier plate portion 503 is formed with a cut out slot 504 so as to pass the stem of the respective intake valve 66.

A control valve element is depicted and is identified generally by the reference numeral 505. Like the previously described embodiments, the control valve element 505 is supported in a bore 506 at the bight of the respective intake passage 64a and/or 64b. The valve element 505 has a cylindrical portion 507 that is cut out at 508 to form the flow controlling area.

As may be readily seen in Figure 11, when the control valve element 501 is in its first position, the cut out 508 extends to the upper periphery of the rectifier plate portion 503 and all air will be directed to the outer side of the respective inlet passage 64a to further improve the tumble action.

With this embodiment, since the rectifier plate portion 503 is formed integrally with the valve seat 502, a separate element inserted into the cylinder head which might become displaced is avoided as is a complicated casting practice. Also, the way in which the valve seat is pressed into the cylinder head will further insure against any displacement of this element.

With this embodiment, also, when operating with the control valve element 505 in its second, fully opened position, the rectifier plate portion 503 also serves the function of providing more laminar flow to the intake charge improves the volumetric efficiency of the engine and the flow distribution within the individual cylinders.

It should be readily apparent from the foregoing description that the described construction is effective in ensuring the desired degree of turbulence and air flow within the combustion chamber under all running conditions. In addition, the rectifier plate-control valve combination operates in such a way as to ensure the desired flow pattern, provide a smooth flow path in all conditions of the control valve and to provide a positive stop for the opening movement of the control valve.

## Claims

1. An internal combustion engine having an induction system and comprising a cylinder head and a cylinder block, said cylinder head at least partially defining a combustion chamber, an intake passage arrangement serving at least one intake valve of a cylinder, said intake passage arrangement being controlled by a control valve (54) which is rotatably supported in the cylinder head (18) wherein the axis of the control valve (54) extends transversely to the flow path of the intake charge through the intake passage arrangement (33,34) and a rectifier plate arrangement which is disposed within a downstream end portion of an intake passage (33, 34),
**characterised in that** the control valve (54) is disposed at a bight of a lower side of the intake passage arrangement (33,34) in proximity to the combustion chamber, said rectifier plate arrangement extending from an intake valve seat portion upwardly into the intake passage arrangement (33,34).

2. Internal combustion engine as claimed in claim 1,
**characterised in that**
the rectifier plate (57) has a cylindrical base portion (58) and a rectifier plate portion (59) which extends integrally upwardly from the cylindrical base portion (58) into the respective intake passage (33,34) controlled by said control valve (54).

3. Internal combustion engine as claimed in claim 2,
**characterised in that**
the cylindrical base portion (58) is received within a cylinder head counterbore (38) beneath the intake valve seat (37).

4. Internal combustion engine as claimed in at least one of the preceding claims 2-3,
**characterised in that**
an upstream edge of the rectifier plate portion (59) is adapted to form a stop (62) of a valve cut-out (56) of the control valve (54).

5. Internal combustion engine as claimed in at least one of the preceding claims 2-4,
**characterised in that**
said rectifier plate portion (59) is designed to comprise an integral bent portion providing a clearance for a stem of the associated intake valve (35).

6. Internal combustion engine as claimed in at least one of the preceding claims 2-5,
**characterised in that**
said rectifier plate portion (59) comprises a semi-cylindrical depression (61) for the stem of the intake valve (35).

7. Internal combustion engine as claimed in at least one of the preceding claims 2-6,
**characterised in that**
said rectifier plate portion (59) has a generally V-shaped configuration serving as a flow guide portion for the intake charge.

8. Internal combustion engine as claimed in at least one of the preceding claims 1-7,
**characterised in that**
said rectifier plate divides a primary intake passage (33) into two substantially equal flow areas.

9. Internal combustion engine as claimed in at least one of the preceding claims 2-8,
**characterised in that**
said rectifier plate portion (59) provides a flow area substantially smaller than one from half of the cross-section of the intake passage (33,34) when the control valve (54) is in its closed position.

10. Internal combustion engine as claimed in at least one of the preceding claims 2-9,
**characterised in that**
the cross-section of an upper part of the intake passage (33,34) defined by the rectifier plate portion (59) is decreasing toward the opening of the intake passage (33,34) to the combustion chamber.

11. Internal combustion engine as claimed in claim 4 or one of the preceding claims 5-10 when referring to claim 4,
**characterised in that**
the valve cut-out (56) is configured such that the cut-out (56) forms a smooth continuous extension of the associated intake passage (33,34) when the control valve (54) is in its fully opened position.

12. Internal combustion engine as claimed in claim 4 or one of the preceding claims 5-11, when referring to claim 4,
**characterised in that**
the control valve (54) comprises a substantially cylindrical configuration having the valve cut-out (56) for assuring a smooth flow of intake charge through the controlled intake passage (33,34), and that said control valve (54) when switched in its closed position abutting against the upstream edge of the rectifier plate portion (59) of the rectifier plate (57) diverts the flow to an upper flow area of the intake passage (33,34) defined by the rectifier plate (57).

13. Internal combustion engine as claimed in at least one of the preceding claims 1-12,
**characterised in that**
the control valve (54) provides a substantially continuous surface area with the cylinder head, specifically the air surface of the intake passage (33,34) in each of its positions.

14. Internal combustion engine as claimed in claim 13 when referring to claim 4,
**characterised in that**
a substantially continuous smooth flow surface is provided between the control valve surface, specifically the surface of the valve cut-out (56) and the rectifier plate portion (59) when said control valve (54) assumes its closed position.

15. Internal combustion engine as claimed in at least one of the preceding claims 1-14,
**characterised in that**
the intake passage is of the Siamese type providing primary and secondary intake passages (33,34) for each cylinder, and that a throttle valve assembly (207) is journaled in a cylinder head and supporting a valve plate (209) which, in its closed position, substantially precludes flow through the secondary intake passage (34), directing all of the flow through the primary intake passage (33) in which the control valve and the rectifier plate are arranged.

16. Internal combustion engine as claimed in claim 15,
**characterised in that**
the engine has three stages of different intake flow beyond the full range of engine speed, wherein the first stage is acquired when the valve plate (209) assumes its closed position and the control valve assumes also its closed position, whereas the second stage is obtained when the valve plate (209) assumes its closed position and the control valve assumes its open position, while the third stage is adjusted when all valves including the valve plate (209) and the control valve assume its open position.

## Patentansprüche

1. Brennkraftmaschine mit einem Einlaßsystem und mit einem Zylinderkopf und einem Zylinderblock, wobei der Zylinderkopf zumindest teilweise eine Brennkammer begrenzt, einer Einlaßkanalanordnung, die zumindest ein Einlaßventil eines Zylinders beschickt, wobei die Einlaßkanalanordnung durch ein Steuerventil (54) gesteuert ist, das in dem Zylinderkopf (18) drehbar gelagert ist, wobei sich die Achse des Steuerventils (54) quer zu dem Strömungsweg der Einlaßladung durch die Einlaßkanalanordnung (33,34) erstreckt, und einer Richtplattenanordnung, die in einem stromabseitigen Endabschnitt eines Einlaßkanals (33,34) angeordnet ist, **dadurch gekennzeichnet**, daß das Steuerventil (54) an einer Ausbuchtung einer Unterseite der Einlaßkanalanordnung (33,34) nahe der Brennkammer angeordnet ist, wobei sich die Richtplattenanordnung von einem Einlaßventilsitzabschnitt nach oben in die Einlaßkanalanordnung (33,34) erstreckt.

2. Brennkraftmaschine nach Anspruch 1, **dadurch gekennzeichnet**, daß die Richtplatte (57) einen zylindrischen Grundabschnitt (58) und einen Richtplattenabschnitt (59) aufweist, der sich integral von dem zylindrischen Grundabschnitt (58) nach oben in den jeweiligen Einlaßkanal (33,34) erstreckt, der durch das Steuerventil (54) gesteuert ist.

3. Brennkraftmaschine nach Anspruch 2, **dadurch gekennzeichnet**, daß der zylindrische Grundabschnitt (58) in einer Zylinderkopfsenkbohrung (38) unter dem Einlaßventilsitz (37) aufgenommen ist.

4. Brennkraftmaschine nach zumindest einem der vorhergehenden Ansprüche 2 bis 3, **dadurch gekennzeichnet**, daß eine stromaufwärtige Kante des Richtplattenabschnitts (59) vorgesehen ist, einen Anschlag (62) einer Ventilausnehmung (56) des Steuerventils (54) zu bilden.

5. Brennkraftmaschine nach zumindest einem der vorhergehenden Ansprüche 2 bis 4, **dadurch gekennzeichnet**, daß der Richtplattenabschnitt (59) einen integralen Biegeabschnitt aufweist, der einen Zwischenraum für einen Schaft des zugeordneten Einlaßventils (35) schafft.

6. Brennkraftmaschine nach zumindest einem der vorhergehenden Ansprüche 2 bis 5, **dadurch gekennzeichnet**, daß der Richtplattenabschnitt (59) eine halbzylindrische Vertiefung (61) für den Schaft des Einlaßventiles (35) aufweist.

7. Brennkraftmaschine nach zumindest einem der vorhergehenden Ansprüche 2 bis 6, **dadurch gekennzeichnet**, daß der Richtplattenabschnitt (59) eine im wesentichen V-förmige Gestalt besitzt, die als ein Strömungsführungsabschnitt für die Einlaßladung dient.

8. Brennkraftmaschine nach zumindest einem der vorhergehenden Ansprüche 1 bis 7, **dadurch gekennzeichnet**, daß die Richtplatte einen Haupteinlaßkanal (33) in zwei im wesentlichen gleiche Strömungsflächen teilt.

9. Brennkraftmaschine nach zumindest einem der vorhergehenden Ansprüche 2 bis 8, **dadurch gekennzeichnet**, daß der Richtplattenabschnitt (59) eine Strömungsfläche schafft, die im wesentlichen kleiner als eine Hälfte des Querschnitts des Einlaßkanals (33,34) ist, wenn das Steuerventil (54) in seiner geschlossenen Stellung ist.

10. Brennkraftmaschine nach zumindest einem der vorhergehenden Ansprüche 2 bis 9, **dadurch gekennzeichnet**, daß der Quer-schnitt eines oberen Teils des Einlaßkanals (33,34), der durch den Richtplattenabschnitt (59) begrenzt ist, zu der Öffnung des Einlaßkanals (33,34) in die Brennkammer hin abnimmt.

11. Brennkraftmaschine nach Anspruch 4 oder einem der vorhergehenden Ansprüche 5 bis 10 mit Bezug auf Anspruch 4, **dadurch gekennzeichnet**, daß die Ventilausnehmung (56) derart geformt ist, daß die Ausnehmung (56) eine glatte fortlaufende Verlängerung des zugeordneten Einlaßkanals (33,34) bildet, wenn das Steuerventil (54) in seiner vollständig geöffneten Stellung ist.

12. Brennkraftmaschine nach Anspruch 4 oder einem der vorhergehenden Ansprüche 5 bis 11 mit Bezug auf Anspruch 4, **dadurch gekennzeichnet**, daß das Steuerventil (54) eine im wesentlichen zylindrische Gestalt besitzt, die die Ventilausnehmung (56) zur Sicherung einer glatten Strömung der Einlaßladung durch den gesteuerten Einlaßkanal (33,34) aufweist, und daß das Steuerventil (54), wenn dieses in seine geschlossene Stellung geschaltet ist, wobei es gegen die stromaufwärtige Kante des Richtplattenabschnitts (59) der Richtplatte (57) stößt, die Strömung zu einer oberen Strömungsfläche des Ein-laßkanals (33,34) lenkt, die durch die Richtplatte (57) begrenzt ist.

13. Brennkraftmaschine nach zumindest einem der vorhergehenden Ansprüche 1 bis 12, **dadurch gekennzeichnet**, daß das Steuerventil (54) in jeder seiner Stellungen eine im wesentlichen fortlaufende Oberfläche mit dem Zylinderkopf, insbesondere der Luftoberfläche des Einlaßkanals (33,34) schafft.

14. Brennkraftmaschine nach Anspruch 13 mit Bezug auf Anspruch 4, **dadurch gekennzeichnet**, daß eine im wesentlichen fortlaufende glatte Strömungsoberfläche zwischen der Steuerventiloberfläche, insbesondere der Oberfläche der Ventilausnehmung (56) und dem Richtplattenabschnitt (59) vorgesehen ist, wenn das Steuerventil (54) seine geschlossene Stellung einnimmt.

15. Brennkraftmaschine nach zumindest einem der vorhergehenden Ansprüche 1 bis 14, **dadurch gekennzeichnet**, daß der Einlaßkanal vom Zwillingstyp ist, der Haupt- und Nebeneinlaßkanäle (33,34) für jeden Zylinder vorsieht, und daß eine Drosselventilanordnung (207) in einem Zylinderkopf drehbar gelagert ist, und eine Ventilplatte (209) trägt, die in ihrer geschlossenen Stellung Strömung durch den Nebeneinlaßkanal (34) im wesentlichen verhindert, wobei die ganze Strömung durch den Haupteinlaßkanal (33) gelenkt wird, in dem das Steuerventil und die Richtplatte angeordnet sind.

16. Brennkraftmaschine nach Anspruch 15, **dadurch gekennzeichnet**, daß die Maschine drei Stufen unterschiedlicher Einlaßströmung über den gesamten Motordrehzahlbereich besitzt, wobei die erste Stufe erhalten wird, wenn die Ventilplatte (209) ihre geschlossene Stellung einnimmt, und das Steuerventil ebenso seine geschlossene Stellung einnimmt, während die zweite Stufe erhalten wird, wenn die Ventilplatte (209) ihre geschlossene Stellung einnnimmt und das Steuerventil seine offene Stellung einnimmt, während die dritte Stufe eingestellt ist, wenn alle Ventile einschließlich der Ventilplatte (209) und des Steuerventils ihre offene Stellung einnehmen.

## Revendications

1. Moteur à combustion interne ayant un système d'admission et comprenant une culasse et un bloc-cylindres, ladite culasse délimitant au moins partiellement une chambre de combustion, un agencement de passages d'admission desservant au moins une soupape d'admission d'un cylindre, ledit agencement de passages d'admission étant commandé par une soupape de commande (54) qui est supportée de façon rotative dans la culasse (18), dans lequel l'axe de la soupape de commande (54) s'étend transversalement à la trajectoire d'écoulement de la charge d'admission à travers l'agencement de passages d'admission (33, 34) et un agencement de plaque rectificatrice qui est disposé à l'intérieur d'une partie d'extrémité aval d'un passage d'admission (33, 34), caractérisé en ce que la soupape de commande (54) est disposée dans une anse d'un côté inférieur de l'agencement de passages d'admission (33, 34) à proximité de la chambre de combustion, ledit agencement de plaque rectificatrice s'étendant, depuis une zone de siège de soupape d'admission, vers le haut, jusque dans l'agencement de passages d'admission (33, 34).

2. Moteur à combustion interne selon la revendication 1, caractérisé en ce que la plaque rectificatrice (57) a une partie de base cylindrique (58) et une partie de plaque rectificatrice (59) qui s'étend de façon unitaire, vers le haut, depuis la partie de base cylindrique (58) jusque dans le passage d'admission (33, 34) respectif commandé par ladite soupape de commande (54).

3. Moteur à combustion interne selon la revendication 2, caractérisé en ce que la partie de base cylindrique (58) est reçue à l'intérieur d'un logement cylindrique (38) de la culasse situé au-dessous du siège de soupape d'admission (37).

4. Moteur à combustion interne selon au moins une des revendications 2-3 précédentes, caractérisé en ce qu'un bord amont de la partie de plaque rectificatrice (59) est adapté pour former un dispositif d'arrêt (62) d'une valve de coupure (56) de la soupape de commande (54).

5. Moteur à combustion interne selon au moins une des revendications 2-4 précédentes, caractérisé en ce que ladite partie de plaque rectificatrice (59) est conçue pour comprendre une partie courbée monobloc offrant un espace libre pour une tige de la soupape d'admission (35) associée.

6. Moteur à combustion interne selon au moins une des revendications 2-5 précédentes, caractérisé en ce que ladite partie de plaque rectificatrice (59) comprend un creux semi-cylindrique (61) pour la tige de la soupape d'admission (35).

7. Moteur à combustion interne selon au moins une des revendications 2-6 précédentes, caractérisé en ce que ladite partie de plaque rectificatrice (59) a une configuration globalement en forme de V servant de partie de guidage d'écoulement pour la charge d'admission.

8. Moteur à combustion interne selon au moins une des revendications 1-7 précédentes, caractérisé en ce que ladite plaqué rectificatrice divise un passage d'admission primaire (33) en deux surfaces d'écoulement sensiblement égales.

9. Moteur à combustion interne selon au moins une des revendications 2-8 précédentes, caractérisé en ce que ladite partie de plaque rectificatrice (59) fournit une surface d'écoulement sensiblement plus petite que celle d'une moitié de la section transversale du passage d'admission (33, 34) lorsque la soupape de commande (54) est dans sa position fermée.

10. Moteur à combustion interne selon au moins une des revendications 2-9 précédentes, caractérisé en ce que la section transversale d'une partie supérieure du passage d'admission (33, 34) définie par la partie de plaque rectificatrice (59) diminue vers l'ouverture du passage d'admission (33, 34) allant à la chambre de combustion.

11. Moteur à combustion interne selon la revendication 4 ou une des revendications 5-10 précédentes lorsqu'on se réfère à la revendication 4, caractérisé en ce que la valve de coupure (56) est configurée de sorte que la valve de coupure (56) forme une extension continue régulière du passage d'admission (33, 34) associé lorsque la soupape de commande (54) est dans sa position complètement ouverte.

12. Moteur à combustion interne selon la revendication 4 ou une des revendications 5-11 précédentes lorsqu'on se réfère à la revendication 4, caractérisé en ce que la soupape de commande (54) comprend une configuration sensiblement cylindrique ayant la valve de coupure (56) pour assurer un écoulement régulier de la charge d'admission à travers le passage d'admission (33, 34) commandé, et en ce que ladite soupape de commande (54), lorsqu'elle commute sur sa position fermée, s'appuyant contre le bord amont de la partie de plaque rectificatrice (59) de la plaque rectificatrice (57), dévie l'écoulement vers une surface d'écoulement supérieure du passage d'admission (33, 34) délimité par la plaque rectificatrice (57).

13. Moteur à combustion interne selon au moins une des revendications 1-12 précédentes, caractérisé en ce que la soupape de commande (54) fournit une superficie sensiblement continue avec la culasse, en particulier la surface d'air du passage d'admission (33, 34) dans chacune de ses positions.

14. Moteur à combustion interne selon la revendication 13 lorsqu'on se réfère à la revendication 4, caractérisé en ce qu'une surface d'écoulement sensiblement régulière et continue se trouve entre la surface de la soupape de commande, en particulier entre la surface de la valve de coupure (56), et la partie de plaque rectificatrice (59) lorsque ladite soupape de commande (54) prend sa position fermée.

15. Moteur à combustion interne selon l'une au moins des revendications 1-14 précédentes, caractérisé en ce que le passage d'admission est du type jumelé prévoyant des passages d'admission (33, 34) primaire et secondaire pour chaque cylindre, et en ce qu'un ensemble de soupape d'étranglement (207) est disposé dans une culasse et supporte une plaque de soupape (209) qui, dans sa position fermée, empêche sensiblement l'écoulement à travers le passage d'admission secondaire (34), dirigeant tout l'écoulement à travers le passage d'admission primaire (33) dans lequel la soupape de commande et la plaque rectificatrice sont agencées.

16. Moteur à combustion interne selon la revendication 15, caractérisé en ce que le moteur a trois phases d'écoulements d'admission différents au-delà du plein régime de vitesse du moteur, dans lequel la première phase est obtenue quand la plaque de soupape (209) prend sa position fermée et que la soupape de commande prend aussi sa position fermée, alors que la deuxième phase est obtenue quand la plaque de soupape (209) prend sa position fermée et que la soupape de commande prend sa position ouverte, tandis que la troisième phase est réglée quand toutes les soupapes, y compris la plaque de soupape (209) et la soupape de commande, prennent leur position ouverte.
